# EUROPEAN PATENT SPECIFICATION

(11) **EP 3 702 106 B1**
(45) Date of publication and mention of the grant of the patent: **09.11.2022**
(21) Application number: 20275045.1
(22) Date of filing: 18.02.2020
(51) Int. Cl.: B25B 27/00, B23P 19/08, B25B 27/28

(54) **GAITER FITTING DEVICE**
MANSCHETTENBEFESTIGUNGSVORRICHTUNG
DISPOSITIF DE FIXATION DE GUÊTRE

(30) Priority: 22.02.2019 GB 201902450
(43) Date of publication of application: 02.09.2020
(73) Proprietor: Bailcast Limited, Chorley, Lancashire PR6 7BX (GB)
(72) Inventor: SWIRES, Robert Andrew, Chorley, Lancashire PR6 7BX (GB)
(74) Representative: Wilson Gunn

(56) References cited:
- DE-A1-102008 057 413
- US-A- 2 895 215
- US-A1- 2004 261 238
- US-A1- 2009 249 600

## Description

### Technical Field of the Invention

The present invention relates to a gaiter fitting device which can be used to apply flexible gaiters (also known as boots) to joints, particularly, but not exclusively, constant velocity joints in vehicles and joints between axles and drive shafts.

### Background to the Invention

DE 10 2008 057 413 A1 discloses a gaiter fitting device according to the preamble of claim 1 which uses a pneumatic piston and cylinder assembly to spread arms around which a gaiter is placed to fit the gaiter to a joint. The piston is moved using compressed air, and a pressure relief valve is incorporated into a handle of the device adjacent a user operable valve so as to prevent over pressurisation and hence device failure (which could cause injury to an operator).

A problem with this device is that the pressure relief valve protrudes from the device, rendering it susceptible to damage. It is also accessible to a user and so there is a risk that a user may tamper with or replace it, potentially making the device dangerous to operate.

Another problem with this device is that the piston contacts the arms close to pivots on which they are mounted, thus requiring the piston to exert a large force to spread the arms and stretch a gaiter.

In other existing gaiter fitting devices, a single use pressure relief valve is included. In the event that the pressure relief valve is triggered these devices require disassembly, component replacement or specialist repair to restore normal function.

It is the object of embodiments of the present invention to provide a gaiter fitting device which addresses the problems associated with existing devices.

### Summary of the Invention

According to an aspect of the present invention there is provided a pneumatically operable gaiter fitting device comprising a pneumatic actuator operable, in use, to expand a gaiter, the pneumatic actuator comprising: a piston, the piston being hollow and open ended to permit a shaft over which a gaiter is to be fitted to be received into the piston during use of the device, and comprising an abutment surface; a plurality of pivotally mounted arms to receive and spread a gaiter wherein one end of each arm extends out of the device to a free end and an opposite end of each arm, beyond the point about which the arm can pivot, can contact the abutment surface; a self-resetting pressure relief valve; a user operable valve; and characterised in that: the self-resetting pressure relief valve is comprised in the piston which operates to permit or restrict flow of fluid through the piston from one side of the piston to the other.

The self-resetting pressure relief valve being comprised in the pneumatic actuator reduces the risk of the self-resetting pressure relief valve being tampered with or otherwise damaged. Provision of a self-resetting pressure relief valve allows the user to continue to use the device after the self-resetting pressure relief valve has activated without the need for repair or replacement of the device.

. The piston may be disposed in a bore or bores, which form a cylinder.

The self-resetting pressure relief valve limits the pressure differential between opposite sides of the piston. As the self-resetting pressure relief valve is comprised in the piston it will generally not be readily accessible and thus exposed to a risk of damage or tampering.

The self-resetting pressure relief valve may be disposed in a recess in the piston. This further helps avoid deliberate or accidental contacting of the self-resetting pressure relief valve. The self-resetting pressure relief valve may be disposed in an end face of the piston.

Other arrangements are possible, it being preferred that the self-resetting pressure relief valve is located so that it does not interfere with operation of the tool such as being hidden from the functionality of the tool. The self-resetting pressure relief valve could be disposed other than in the end face of the piston.

The self-resetting pressure relief valve may comprise a port and a valve member configured to close the port. A resilient member may be arranged to bias the valve member towards the port. The resilient member may be a resiliently flexible beam or leaf spring. Such an arrangement enables a self-resetting pressure relief valve to be produced with a significantly smaller depth than conventional self-resetting pressure relief valves which employ a helical spring.

The port may have a substantially circular cross-section. The valve member may comprise a plug. The plug may be at least in part substantially frustro-conical.

The resilient member may be connected to the piston by a fastener which urges it against two spaced apart contact points on the piston in order to bias the member so that it urges the valve member towards the port.

The resilient member and valve member may be comprised in a single piece of material. For example they may be formed, such as moulded, from a plastics material. Forming both components from a single piece of material both simplifies and reduces the cost of production.

Alternatively, the resilient member and valve member may be formed from two separate pieces. The two separate pieces may be attached together using a suitable fastening means. The two pieces may be formed of different materials. For example, the resilient member may be formed from a metallic material, and the valve member may be formed from an elastic material, such as rubber.

The port may comprise an aperture in the piston. The port may comprise a bore through the piston. The bore may have a substantially circular cross-section and may be substantially cylindrical.

The piston may comprise a substantially frustro-conical abutment surface.

Arranging for an end of the arm, beyond the pivot point, to contact the abutment surface serves to maximise leverage available to the piston in driving the arms.

### Detailed Description of the Invention

In order that the invention may be more clearly understood one or more embodiments thereof will now be described, by way of example only, with reference to the accompanying drawings, of which:
- Figure 1: is a perspective view of a gaiter fitting device;
- Figure 2: is a cross section of the device taken along the line II-II of Fig. 1;
- Figure 3: is a corresponding view to Fig. 2, with the device in a deployed state;

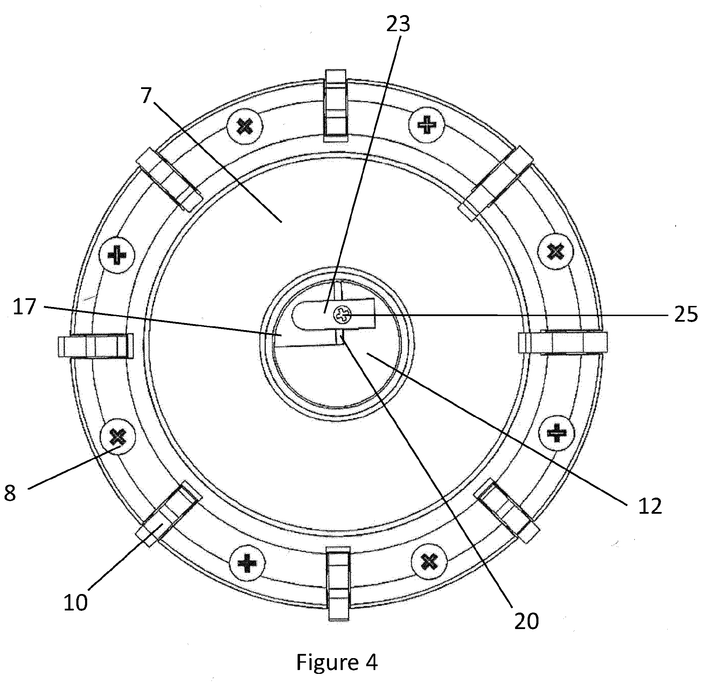

- Figure 4: is an end view of the device;

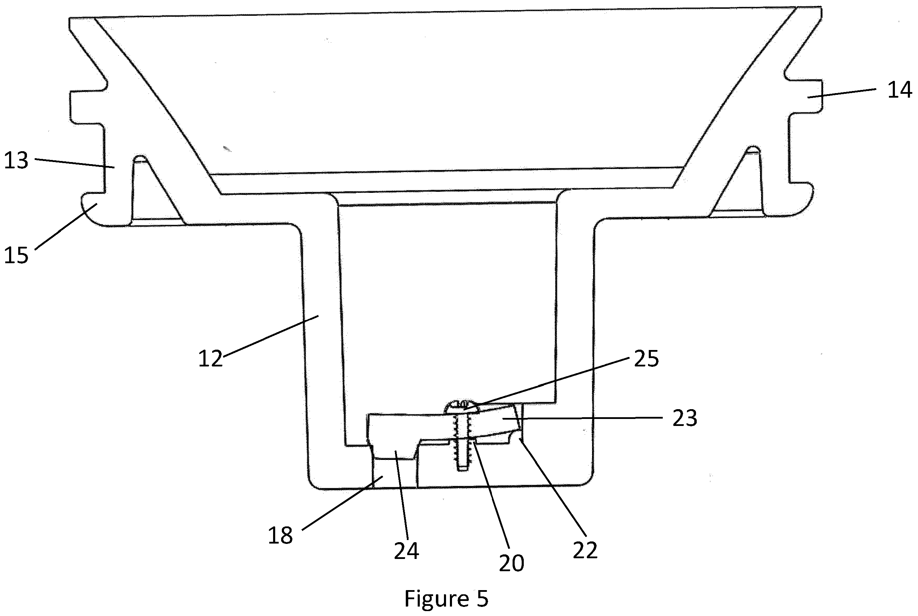

- Figure 5: is a transverse cross section through the piston of the device;

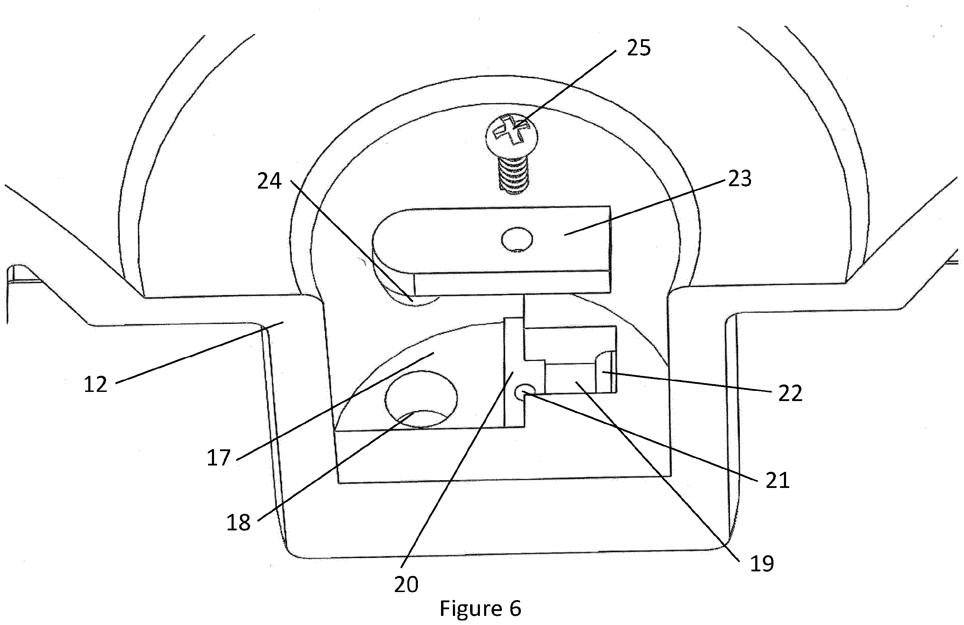

- Figure 6: is a partial, exploded, cut away view of the piston of the device;
- Figure 7: is a corresponding view to Fig. 5 of part of the piston of the device showing the self-resetting pressure relief valve in an activated state;

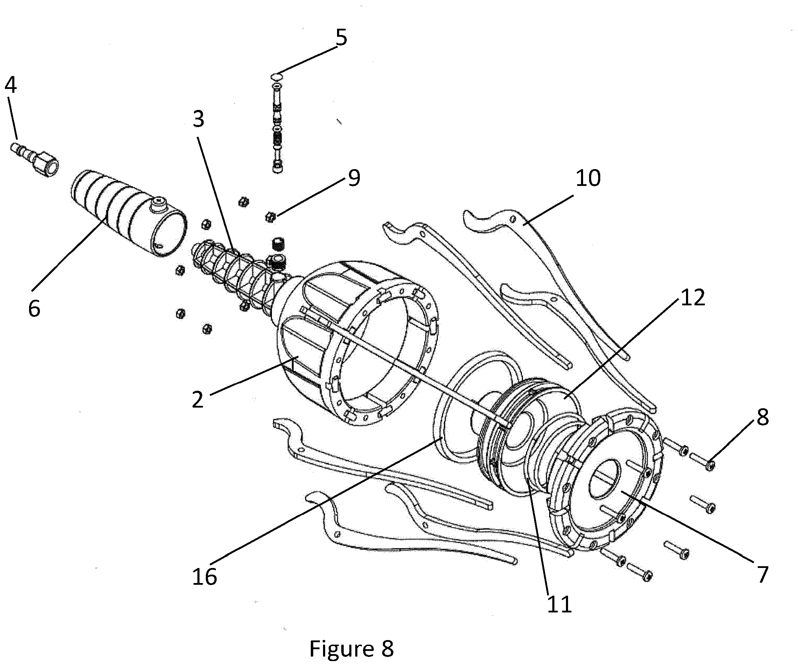

- Figure 8: is an exploded perspective view of the device; and
- Figure 9: is a corresponding view to Fig. 2 of the device in use.

Referring to the drawings, a gaiter fitting device 1 comprises a main body 2 which comprises a substantially cylindrical portion. One end is open. The opposite end is closed and has a dome-like outer surface. An elongate handle 3 protrudes from the centre of the dome. The main body 2 and handle 3 are moulded from a plastics material, in one piece. A suitable material is glass filled nylon.

The open end of the main body 2 opens into a substantially cylindrical inner bore which extends over approximately two thirds of the length of the substantially cylindrical and domed regions of the main body 2 (ignoring the handle 3), and has a diameter approximately of 80% of the outside diameter of the substantially cylindrical portion of the main body 2.

The inner bore extends to a second, smaller, coaxial, substantially cylindrical bore with a diameter approximately one third of that the larger, inner, bore and which extends from the end of the larger bore through the domed end of the main body and into the base of the handle 3. The smaller bore has a length about half that of the larger bore. At the end of the smaller bore, in the base of the handle, the diameter of the smaller bore reduces slightly in two steps and the bore is closed, save for a relatively small opening into a conduit extending in the handle 3.

The handle 3 is elongate, has a generally circular cross-section with a diameter that reduces gradually away from the main body to a free end. It is sized and shaped to allow a user to grip it with a single hand, and comprises a webbed support structure. The conduit extending in the handle 3 provides a fluid connection between the end of the smaller bore in the main body 2 and a hose fitting 4 at the free end of the handle 3. A user operable valve 5 is disposed in the conduit adjacent the main body 2. The valve is arranged to enable a user to control the flow of fluid through the conduit from the hose fitting into the device, and to allow fluid to escape from the device to atmosphere.

A rubber, or similar material, sheath 6 is placed around the handle 3 to provide a comfortable grip for a user.

Attached to the open end of the main body 2 is an annular endplate 7, formed from the same material as the main body. The inside diameter of the endplate 7 is approximately that of the smaller bore in the main body 2. The endplate 7 is affixed to an end face of the main body 2 by eight screws 8 extending axially through respective apertures distributed evenly around the endplate 7, through corresponding apertures in a flange formed around the open end of the main body 2 and into respective nuts 9.

Disposed at the open end of the main body 2 is a set of eight pivotally mounted metallic arms 10. The arms 10 are elongate, and are each pivotally mounted to a respective shaft retained in opposed recesses in the endplate 7 and end face of the main body 2. The arms 10 are spaced evenly around the endplate 7. The arms 10 pivot about a point about a sixth of the way along their length. A shorter S-shaped section of each arm 10 extends radially inwardly and into the opening in the main body 2. The remainder of the arm 10 extends, with a much more elongate double curve, away from the body.

Each arm 10 is mounted to pivot about an axis tangential to the annular endplate 7. A helical spring 11 is disposed in the main body 2, between the endplate 7 and the ends of the arms 10. The spring 11 is sized so that it bears on the endplate 7 and the S-shaped part of the arms and urges the arms 10 towards their closed configuration. The spring 11 tapers from a large end which is in contact with the arms 10, to a smaller end which bears on the endplate 7.

A piston 12 is disposed in the cylindrical bores in the main body 2. The piston 12 is moulded from a plastics material, a suitable material being polyamide (Nylon), and comprises a hollow substantially cylindrical section, formed from a cylindrical wall, with a closed end face. The outside diameter of this section provides the piston 12 with a close, sliding fit in the smaller bore in the main body 2 and this section is of about the same length as the smaller bore. At the opposite end of the section to the end face the cylindrical wall of the piston 12 extends through a 90° angle to extend radially outward and form an annular portion of outside diameter roughly double that of the cylindrical section. The wall then turns through approximately 45° to form an inclined wall which extends radially outward until the outside edge of the wall provides a close, sliding fit with the larger bore in the main body 2.

The inside surface of the inclined wall is slightly convex in cross section, and provides a substantially frustro-conical abutment surface which in use contacts the ends of the arms 10, as discussed further below. When the arms move to their closed position they urge the piston 12 towards the handle 3. When the arms 10 are in their fully closed configuration the piston 12 is moved to a fully retracted position in which the end face of the piston 12 that faces the handle 3 abuts the first step formed in the smaller bore within the main body 2.

A pair of ribs 13, 14 protrude from approximately the midpoint of the outside of the inclined surface of the piston 12. One rib 13 protrudes substantially axially away from the inclined surface towards, and terminating substantially in the plane of, the annular part of the piston 12. Towards the free end of the rib 13 a radially outwardly extending step 15 is formed. The outside diameter of this step 15 is less than that of the inside diameter of the larger bore in the main body 2, so that it is spaced from the bore. The radial outer edge of the step 15 is curved so that its diameter reduces slightly towards the free end of the rib 13 so that it has a generally wedge shaped profile. The second rib 14 protrudes radially from the inclined surface, and extends to substantially the same diameter as the largest diameter of the inclined surface so it has a close, sliding fit with the larger bore of the main body 2. The second rib 14 together with the inclined surface and inside wall of the cylindrical bore bound an annular region of triangular cross section.

A resilient, rubber or like material annular sealing ring 16 is disposed in the space bounded by the ribs 13, 14 and step 15 on the piston and the inside wall of the cylindrical bore. The sealing ring travels in the bore with the piston and forms a seal between the piston and bore.

The inside of the end face of the piston 12 includes a recessed generally right-angled segment 17. A substantially cylindrical bore 18 forming a valve port extends through the end face in the recessed segment. A recessed, straight, parallel sided slot 19 is formed in the non- recessed portion of the end face. The slot extends substantially at right angles to a straight edge of the recessed segment 17 and connects to the recessed region 17. The slot 19 is positioned so that a line extending along the centre of the slot 19 parallel to its sides extends through the central axis of the valve port 18. The width of the slot is slightly greater than the diameter of the valve port 18.

The depth of the slot 19 is the same as that of the recessed segment. A raised, flat topped, elongate, step 20 is formed on the recessed end face of the piston, extending across and to either side of the opening into the slot 19. A blind bore 21 is formed into the step, positioned about mid-way between the walls of the slot 19 and mid-way across the width of the step 20. The height of the step 20 is about one tenth of the depth of the recess. A second step 22 is formed adjacent the end wall of the slot 19. The second step 22 has a curved edge and its maximum height over the recessed end wall is about three times that of the first step 20.

A combined valve member and resilient member moulded in one piece from a resiliently flexible plastics material, such as poly(methyl methacrylate), is fitted into the slot 19 in the end face of the piston 12 and closes the valve port 18. The combined member comprises a substantially cuboidal beam 23 with a valve member 24 comprised of a frustroconical plug formed towards the end of one face of the beam 23. The plug 24 has a free end with a diameter smaller than the diameter of the valve port 18. The diameter of the plug increases away from its free end to a diameter larger than the diameter of the valve port 18. The beam 23 fits into the slot 19 with a close sliding fit so that the plug 24 is received into the port 18 and the opposite end of the beam 23 rests on the curved step 22 at the end of the slot 19. A screw 25 extends through a bore in the beam 23 into the bore 21 in the step 20 which extends across the opening to the slot 19. The screw 25 urges the bottom of the beam 23 into contact with the step 20. This causes the beam 23 to flex between the two steps 20, 22, resiliently biasing the beam 23 to urge the plug 24 into the port 18, closing the port 18 with an airtight seal.

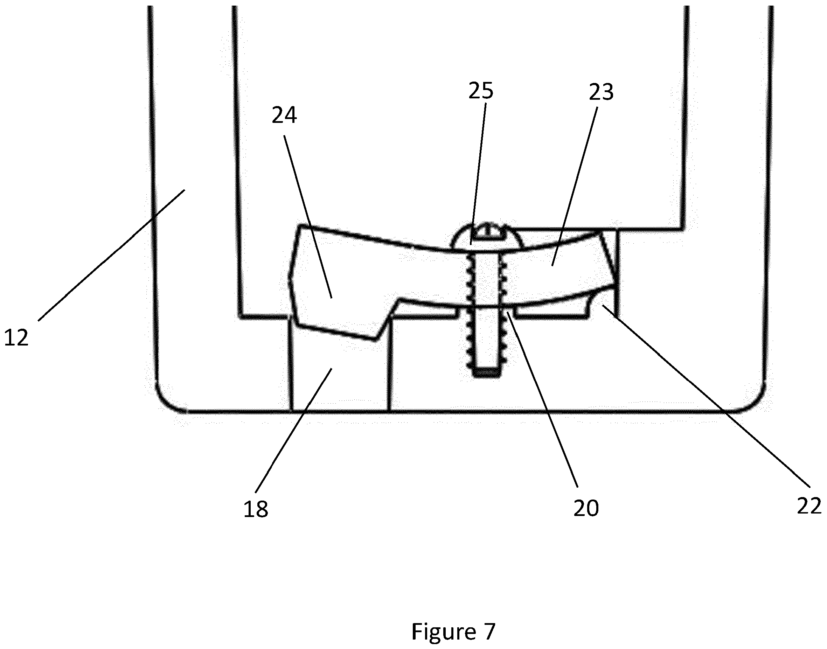

Owing to the resilience of the beam 23, if the air pressure outside the end of the piston 12 is greater than that inside the piston 12 by a certain threshold the pressure difference will urge the plug 24 out of the port 18, bending the beam 23 and allowing gas to flow through the port 18 as shown in an exaggerated fashion in figure 7. When the difference in pressure falls below the threshold the resilience of the beam 23 will urge the plug 24 back into the port 18, closing the self-resetting pressure relief valve. The combined resilient and valve members 23, 24, together with the port 18, thus form a self-resetting pressure relief valve.

The various components of the self-resetting pressure relief valve and the steps formed in the end face of the piston are sized and shaped and the material from which the combined plug and resilient member are formed is selected so that the self-resetting pressure relief valve opens at a predetermined threshold pressure. The threshold pressure is a maximum safe pressure that can be contained by the device.

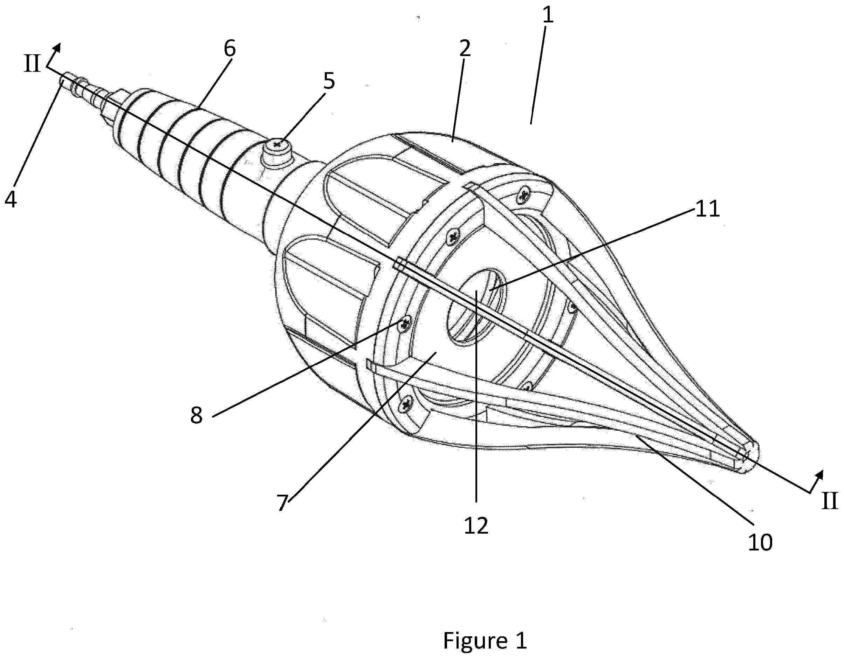

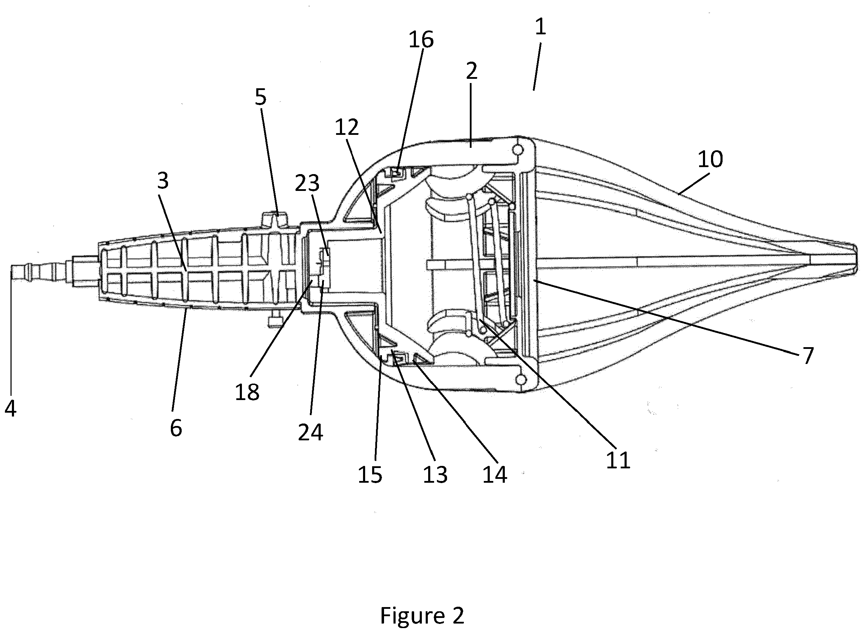

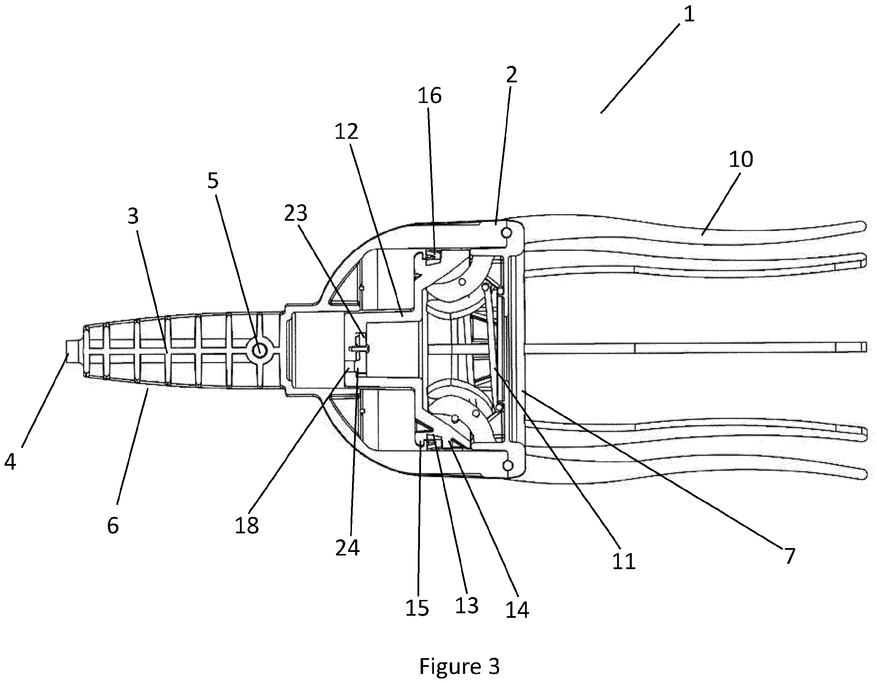

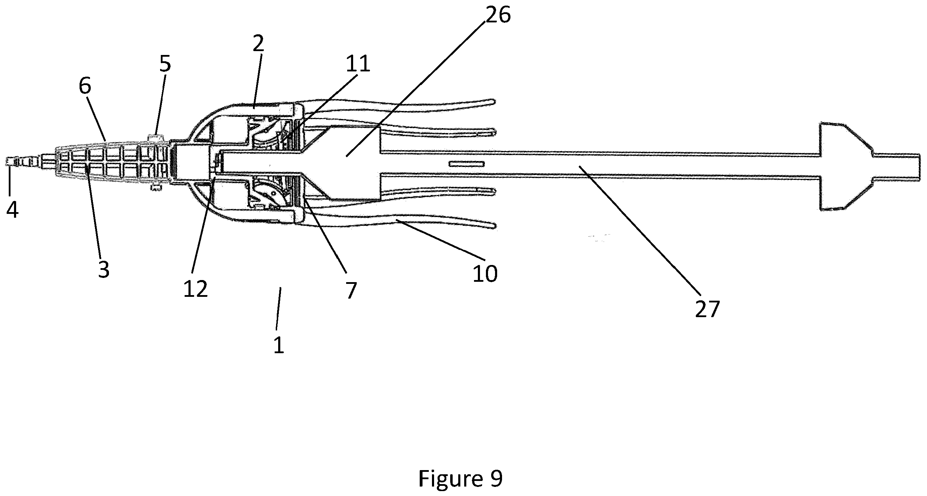

In use, with the device in the state shown in figures 1 and 2, that is, with the arms 10 in their closed configuration and the piston 12 in its fully retracted position, a user places a gaiter (not shown) to be fitted to a drive shaft around the arms 10. A compressed air supply hose is connected to the fitting 4. The user operable valve 5 is opened to allow compressed air to flow through the conduit in the handle 3 into the space in the main body behind the piston 12. The increasing pressure behind the piston 12 forces the piston 12 away from the domed end of the main body 2. As this happens the frustro-conical contact surface of the piston 12 contacts the ends of the arms 10 and moves them radially inwards such that the opposite ends of the arms 10 outside the main body 2, move radially outwards, stretching the gaiter. As the piston 12 contacts the ends of the arms 10 this maximises leverage and thus minimises, for a given set of arms, the amount of force that need be applied by the piston 12 in order to spread the opposite ends of the arms 10. This continues until the arms 10 are fully spread, in the deployed configuration shown in figures 3 and 9, and the ends of the arms 10 inside the main body 2 contact the annular part of the piston 12, arresting any further movement of the piston 12. The gaiter can then be placed over a joint 26 in a shaft 27 over which it is to be fitted. During this process a free end of the shaft 27 is received into the main body 2 of the device and into the piston 12 to allow the gaiter to be positioned a sufficient distance from the free end of the shaft 27.

When the gaiter is correctly positioned over the joint 26 the user will activate the user operable valve 5 to release the air from behind the piston 12. The gaiter and spring 11 will force the arms 10 towards their closed configuration, the spring 11 continuing to provide force when the gaiter is no longer stretched, urging the piston 12 back to its fully retracted position leaving the gaiter partially fitted to the joint 26. The device 1 is then withdrawn, allowing the gaiter to contract into its original shape around the joint 26. The process is then complete, and can be repeated in the same way.

In the event that the air pressure behind the piston 12 exceeds a predetermined safe threshold level, for example because a user continues to admit air when a gaiter is fully stretched, the self-resetting pressure relief valve will open allowing air to flow through the port 18 in the piston 12 to limit the pressure behind the piston 12 to, or near, the threshold pressure. When air is no longer admitted to the space behind the piston 12 and the pressure falls below the threshold the self-resetting pressure relief valve will close automatically allowing continued use of the device.

The self-resetting pressure relief valve is configured so that it can open sufficiently without the beam 23 having to move out of the recessed segment 17 or slot 19 in the piston 12. This prevents, or significantly reduces the risk of, the self-resetting pressure relief valve being accidentally or deliberately being held shut by a shaft 27 which is received into the piston 12 during use.

The one or more embodiments are described above by way of example only. Many variations are possible without departing from the scope of protection afforded by the appended claims. For example, any suitable self-resetting pressure relief valve arranged to automatically open so as to relieve the pressure in the pneumatic actuator when said pressure reaches a predetermined threshold pressure could be used.

## Claims

1. A pneumatically operable gaiter fitting device (1) comprising:
a pneumatic actuator operable, in use, to expand a gaiter, the pneumatic actuator comprising a piston (12), the piston (12) being hollow and open ended to permit a shaft (27) over which a gaiter is to be fitted to be received into the piston (12) during use of the device (1) and comprising an abutment surface;
a plurality of pivotally mounted arms (10) to receive and spread a gaiter wherein one end of each arm (10) extends out of the device (1) to a free end and an opposite end of each arm (10), beyond the point about which the arm (10) can pivot, can contact the abutment surface;
a self-resetting pressure relief valve;
a user operable valve (5); and **characterised in that**:
the self-resetting pressure relief valve is comprised in the piston (12) and operates to permit or restrict flow of fluid through the piston (12) from one side of the piston (12) to the other.

2. A device (1) as claimed in claim 1 wherein the self-resetting pressure relief valve is disposed in a recess in the piston (12).

3. A device (1) as claimed in either claim 1 or 2 wherein the self-resetting pressure relief valve is disposed in an end face of the piston (12).

4. A device (1) as claimed in any preceding claim wherein the self-resetting pressure relief valve comprises a port (18) and a valve member (24) configured to close the port (18).

5. A device (1) as claimed in claim 4 comprising a resilient member (23) arranged to bias the valve member (24) towards the port (18).

6. A device (1) as claimed in claim 5 wherein the resilient member (23) is a resiliently flexible beam or leaf spring.

7. A device (1) as claimed in claim 6 wherein the resilient member (23) is connected to the piston (12) by a fastener (25) which urges it against two contact points on the piston (12) in order to bias the member (23) so that it urges the valve member (24) towards the port (18).

8. A device (1) as claimed in any of claims 5 to 7 wherein the resilient member (23) and valve member (24) are comprised in a single piece of material, for example a plastics material.

9. A device (1) as claimed in any of claims 4 to 8 wherein the port (18) comprises an aperture in the piston (12).

10. A device (1) as claimed in any preceding claim wherein the piston (12) comprises a frustro-conical abutment surface.

## Patentansprüche

1. Pneumatisch betätigbare Manschettenbefestigungsvorrichtung (1), umfassend:
einen pneumatischen Aktuator, der in Verwendung betätigbar ist, um eine Manschette zu expandieren, wobei der pneumatische Aktuator einen Kolben (12) umfasst, wobei der Kolben (12) hohl ist und ein offenes Ende hat, um es einer Welle (27), über der eine Manschette angebracht werden soll, zu erlauben, während der Verwendung der Vorrichtung (1) in dem Kolben (12) aufgenommen zu werden, und eine Anlagefläche umfasst;
eine Vielzahl von schwenkbar montierten Armen (10) zum Aufnehmen und Spreizen einer Manschette, wobei sich ein Ende jedes Arms (10) aus der Vorrichtung (1) heraus zu einem freien Ende erstreckt und ein gegenüberliegendes Ende jedes Arms (10) über den Punkt hinaus, um den der Arm (10) schwenken kann, die Anlagefläche kontaktieren kann;
ein selbstrückstellendes Druckentlastungsventil;
ein benutzerbetätigbares Ventil (5); und **dadurch gekennzeichnet, dass** das selbstrückstellende Druckentlastungsventil in dem Kolben (12) umfasst ist und so arbeitet, dass es einen Fluidfluss durch den Kolben (12) von einer Seite des Kolbens (12) zur anderen erlaubt oder beschränkt.

2. Vorrichtung (1) nach Anspruch 1, wobei das selbstrückstellende Druckentlastungsventil in einer Aussparung im Kolben (12) angeordnet ist.

3. Vorrichtung (1) nach Anspruch 1 oder 2, wobei das selbstrückstellende Druckentlastungsventil in einer Endfläche des Kolbens (12) angeordnet ist.

4. Vorrichtung (1) nach einem der vorhergehenden Ansprüche, wobei das selbstrückstellende Druckentlastungsventil einen Anschluss (18) und ein Ventilbauteil (24) umfasst, das so konfiguriert ist, dass es den Anschluss (18) schließt.

5. Vorrichtung (1) nach Anspruch 4, umfassend ein elastisches Bauteil (23), das angeordnet ist, um das Ventilbauteil (24) in Richtung des Anschlusses (18) vorzuspannen.

6. Vorrichtung (1) nach Anspruch 5, wobei das elastische Bauteil (23) ein elastisch flexibler Balken oder eine Blattfeder ist.

7. Vorrichtung (1) nach Anspruch 6, wobei das elastische Bauteil (23) mit dem Kolben (12) durch ein Befestigungselement (25) verbunden ist, welches es gegen zwei Kontaktpunkte am Kolben (12) drückt, um das Bauteil (23) so vorzuspannen, dass es das Ventilbauteil (24) in Richtung des Anschlusses (18) drückt.

8. Vorrichtung (1) nach einem der Ansprüche 5 bis 7, wobei das elastische Bauteil (23) und das Ventilbauteil (24) in einem einzigen Materialstück umfasst sind, beispielsweise einem Kunststoffmaterial.

9. Vorrichtung (1) nach einem der Ansprüche 4 bis 8, wobei der Anschluss (18) eine Öffnung im Kolben (12) umfasst.

10. Vorrichtung (1) nach einem der vorhergehenden Ansprüche, wobei der Kolben (12) eine kegelstumpfförmige Anlagefläche umfasst.

## Revendications

1. Dispositif de montage de soufflet apte à fonctionner pneumatiquement (1) comprenant :
un actionneur pneumatique apte à fonctionner, lors d'une utilisation, pour élargir un soufflet, l'actionneur pneumatique comprenant un piston (12), le piston (12) étant creux et à extrémité ouverte pour permettre à un arbre (27) sur lequel un soufflet doit être monté d'être reçu dans le piston (12) pendant l'utilisation du dispositif (1) et
comprenant une surface de butée ;
une pluralité de bras montés de manière pivotante (10) pour recevoir un soufflet et
déployer celui-ci dans lequel une extrémité de chaque bras (10) s'étend hors du dispositif (1) jusqu'à une extrémité libre, et une extrémité opposée de chaque bras (10), au-delà du point autour duquel le bras (10) peut pivoter, peut venir en contact avec la surface de butée ;
une vanne de détente de pression à auto-réenclenchement ;
une vanne apte à être actionnée par un utilisateur (5) ; et **caractérisé en ce que** :
la vanne de détente de pression à auto-réenclenchement est comprise dans le piston (12) et fonctionne pour permettre ou restreindre l'écoulement de fluide à travers le piston (12) d'un côté du piston (12) à l'autre.

2. Dispositif (1) comme revendiqué dans la revendication 1, dans lequel la vanne de détente de pression à auto-réenclenchement est disposée dans un creux dans le piston (12).

3. Dispositif (1) comme revendiqué dans la revendication 1 ou 2, dans lequel la vanne de détente de pression à auto-réenclenchement est disposée dans une face d'extrémité du piston (12).

4. Dispositif (1) comme revendiqué dans l'une quelconque des revendications précédentes, dans lequel la vanne de détente de pression à auto-réenclenchement comprend un orifice (18) et un organe de vanne (24) configuré pour fermer l'orifice (18).

5. Dispositif (1) comme revendiqué dans la revendication 4 comprenant un organe résilient (23) arrangé pour contraindre l'organe de vanne (24) vers l'orifice (18).

6. Dispositif (1) comme revendiqué dans la revendication 5, dans lequel l'organe résilient (23) est une tige flexible de manière résiliente ou un ressort à lames.

7. Dispositif (1) comme revendiqué dans la revendication 6, dans lequel l'organe résilient (23) est relié au piston (12) par une attache (25) qui le pousse contre deux points de contact sur le piston (12) afin de contraindre l'organe (23) de sorte qu'il pousse l'organe de vanne (24) vers l'orifice (18).

8. Dispositif (1) comme revendiqué dans l'une quelconque des revendications 5 à 7, dans lequel l'organe résilient (23) et l'organe de vanne (24) sont compris dans une seule pièce de matériau, par exemple un matériau plastique.

9. Dispositif (1) comme revendiqué dans l'une quelconque des revendications 4 à 8, dans lequel l'orifice (18) comprend une ouverture dans le piston (12).

10. Dispositif (1) comme revendiqué dans l'une quelconque des revendications précédentes dans lequel le piston (12) comprend une surface de butée tronconique.
